# EUROPÄISCHE PATENTSCHRIFT

(11) **EP 2 953 714 B1**
(45) Veröffentlichungstag und Bekanntmachung des Hinweises auf die Patenterteilung: **12.07.2017**
(21) Anmeldenummer: 14703058.9
(22) Anmeldetag: 04.02.2014
(51) Int. Cl.: B01J 13/00, C01B 33/158, C01B 33/159, C01B 33/154, C01B 33/157

(54) **VERFAHREN ZUR HERSTELLUNG EINES FESTEN OXIDISCHEN MATERIALS**
METHOD FOR PRODUCING A SOLID OXIDIC MATERIAL
PROCÉDÉ DE PRODUCTION D'UN MATÉRIAU OXYDANT SOLIDE

(30) Priorität: 05.02.2013 EP 13154051; 05.02.2013 EP 13154056
(43) Veröffentlichungstag der Anmeldung: 16.12.2015
(73) Patentinhaber: BASF SE, 67056 Ludwigshafen am Rhein (DE)
(72) Erfinder: SZEIFERT, Johann Martin, 68163 Mannheim (DE); KUTSCHERA, Michael, 67434 Neustadt (DE)
(86) Internationale Anmeldenummer: PCT/EP2014/052125
(87) Internationale Veröffentlichungsnummer: WO 2014/122117

(56) Entgegenhaltungen:
- EP-A1- 0 849 220
- DE-A1- 19 616 263
- DE-A1- 19 810 565
- US-A- 5 409 683
- US-A1- 2005 079 337
- ROY C ET AL: "Assessment of scCO2 techniques for surface modification of micro- and nanoparticles: Process design methodology based on solubility", JOURNAL OF SUPERCRITICAL FLUIDS, PRA PRESS, US, Bd. 54, Nr. 3, 1. September 2010 (2010-09-01), Seiten 362-368, XP027274007, ISSN: 0896-8446 [gefunden am 2010-06-01]
- CÉDRIC SLOSTOWSKI ET AL: "Near- and Supercritical Alcohols as Solvents and Surface Modifiers for the Continuous Synthesis of Cerium Oxide Nanoparticles", LANGMUIR, Bd. 28, Nr. 48, 4. Dezember 2012 (2012-12-04), Seiten 16656-16663, XP055072349, ISSN: 0743-7463, DOI: 10.1021/la303265t

## Beschreibung

Die vorliegende Erfindung betrifft ein Verfahren zur Herstellung eines porösen, festen oxidischen Materials aus einem Hydrogel des oxidischen Materials sowie das poröse, feste oxidische Material als solches.

Poröse oxidische Materialien sind für zahlreiche Anwendungen von Interesse, beispielsweise als Adsorbentien, Füllstoffe, Trennmittel, Verdicker, Dispergierhilfsmittel, Rieselhilfsmittel, Entschäumer, Mattierungsadditive, Wirkstoffträger und/oder Katalysatorträger. Bei den porösen, festen oxidischen Materialien ist insbesondere die Klasse der Aerogele von Bedeutung. Bei Aerogelen handelt es sich um poröse, feste oxidische Materialien, die im Allgemeinen aus Siliciumoxiden, d. h. Kieselsäure, oder Metalloxiden bestehen. Aerogele, insbesondere Aerogele der Kieselsäure, eignen sich aufgrund ihrer nur geringen Wärmeleitfähigkeit hervorragend als thermisches Isoliermaterial oder aufgrund ihrer großen spezifischen Oberfläche als Trägermaterial für Katalysatoren. Weitere Einsatzgebiete von Aerogelen sind auf den Gebieten der Kunststoffe, z. B. natürliche und künstliche Kautschuke, Klebstoffe, Farben, Lacke, Pharmazie, Kosmetik, Papier-, Textil-, Mineralöl- und Faserindustrie sowie Glas-, Pyro- und Gießereitechnik, wo die Aerogele vielfältige Verwendung als Dispergierhilfsmittel, Verstärker, Rieselhilfsmittel, Schwebemittel, Füllstoffe, Entschäumer, Wirkstoffträger, Mattierungsadditive und/oder Absorbentien finden.

Die Herstellung von porösen, festen oxidischen Materialien, z. B. Aerogelen, gelingt in der Regel durch Entwässern hydratisierter Formen der oxidischen Materialien, sogenannter Hydrogele. Dieses Entwässern ist jedoch mit einer Reihe von Problemen verbunden. Das Entfernen des Wassers aus dem Hydrogel durch einfaches Erhitzen kann zum Kollabieren des Hydrogels oder zur Kristallisation des oxidischen Materials führen, so dass das erhaltene oxidische Material kompakt ist und keine oder nur eine geringe Porosität aufweist. Um diese Probleme zu vermeiden, kann man das Hydrogel in situ generieren und sofort trocknen, beispielsweise durch Versprühen von Wasserglas und Mineralsäure in einer Sprühtrocknungsvorrichtung.

Es ist bekannt, das im Hydrogel enthaltene Wasser durch Behandlung mit einer leichtersiedenden, wasserlöslichen Flüssigkeit, z. B. flüchtigen Alkanolen wie Methanol, Ethanol oder Isopropanol, zu verdrängen und das erhaltene entwässerte Material (bei Verwendung von Alkoholen ein sogenanntes Alkogel) unter überkritischen Bedingungen zu trocknen (siehe beispielsweise US 2249767). Aus EP 171722 ist bekannt, eine solche überkritische Trocknung in CO₂ durchzuführen.

Für viele Anwendungszwecke, insbesondere bei Verwendung als thermisches Isoliermaterial, ist die Aufnahme von Wasser in das poröse, feste oxidische Material unerwünscht, da hierbei das Material altert und seine vorteilhaften Eigenschaften verloren gehen. Zwar führt die Trocknung des Organogels in Gegenwart von Alkoholen zu einer gewissen Hydrophobierung, da die Alkoholmoleküle über ihre OH-Gruppe eine chemische Bindung mit der Oberfläche des oxidischen Materials eingehen können. Die dabei erzielte Hydrophobierung ist jedoch gering und nicht langzeitbeständig.

Als hydrophobierende Reagenzien sind weitere Verbindungen, z. B. siliciumorganische Verbindungen, bekannt, mit denen das getrocknete Hydrogel in der Gasphase behandelt wird oder die auch bereits bei der Fällung, weiteren Prozess-Zwischenschritten oder der überkritischen Trocknung anwesend sein können. Durch die Belegung der Oberfläche mit hydrophoben Verbindungen soll verhindert werden, dass das poröse, feste oxidische Material wieder Wasser aufnimmt. Die zur Hydrophobierung verwendeten Reagenzien sind jedoch teuer, und die Langzeitbeständigkeit der erzielten Hydrophobierung ist ebenfalls nicht zufriedenstellend.

WO 95/06617 beschreibt ein Verfahren zur Herstellung hydrophobierter Kieselsäureaerogele mit verbesserten Eigenschaften, welches die Umsetzung einer Wasserglaslösung mit einer Säure, Waschen des gebildeten Hydrogels mit Wasser zur Entfernung ionischer Bestandteile, Behandlung des Hydrogels mit einem Alkohol, insbesondere Isopropanol, und überkritische Trocknung des erhaltenen Alkogels in Gegenwart des Alkohols umfasst. Die erreichte Hydrophobierung, insbesondere aber ihre Langzeitbeständigkeit, ist jedoch ebenfalls nicht zufriedenstellend. EP 0 653 377 A1 beschreibt ein Verfahren zur Herstellung hydrophobierter Kieselsäureaerogele, bei dem ein Alkogel mit einem in dem Alkohol gelösten Hydrophobierungsreagenz behandelt und unter überkritischen Bedingungen getrocknet wird.

Die nach dem Stand der Technik hergestellten porösen, festen oxidischen Materialien weisen somit den Nachteil auf, dass diese trotz einer hydrophobierten Oberfläche eine Tendenz zur Wasseraufnahme zeigen und daher nicht langzeitstabil sind. Der Erfindung lag deshalb die Aufgabe zugrunde, ein Verfahren bereitzustellen, welche diese Nachteile des Standes der Technik überwindet.

Es wurde nun überraschenderweise gefunden, dass diese Nachteile überwunden werden können, wenn man zur Entfernung des Wassers ein Hydrogel eines oxidischen Materials mit einer mit Wasser mischbaren organischen Flüssigkeit behandelt und anschließend das erhaltene Organogel unter überkritischen Bedingungen in Gegenwart wenigstens einer polyfunktionellen Verbindung V, die wenigstens zwei reaktive Funktionalitäten F aufweist, welche unter Bindungsbildung mit den Atomen des festen oxidischen Materials reagieren können, trocknet, wobei man die wenigstens eine polyfunktionelle Verbindung V bei der überkritischen Trocknung als Lösung der Verbindung V in wenigstens einem organischen Lösungsmittel L', das 0 oder 1 reaktive Funktionalitäten F aufweist, wobei die Verbindung V ausgewählt ist unter C₂-C₆-Alkanpolyolen, C₂-C₄-Alkylencarbonaten und 2-Hydroxyphenol.

Die Erfindung betrifft daher ein Verfahren zur Herstellung von porösen, festen oxidischen Materialien, bei denen es sich um Aerogele handelt, umfassend die Bereitstellung eines Hydrogels des oxidischen Materials, Entfernen des Wassers durch Behandeln des Hydrogels mit einer mit Wasser mischbaren Flüssigkeit und Trocknen des erhaltenen Organogels unter überkritischen Bedingungen in Gegenwart wenigstens einer polyfunktionellen Verbindung V, die wenigstens zwei, beispielsweise 2, 3, 4, 5 oder 6, insbesondere 2 oder 3, reaktive Funktionalitäten F aufweist, welche unter Bindungsbildung mit den Atomen des festen oxidischen Materials reagieren können, wobei die Verbindung V ausgewählt ist unter C₂-C₆-Alkanpolyolen, C₂-C₄-Alkylencarbonaten und 2-Hydroxyphenol, wodurch man das poröse, feste oxidische Material erhält, wobei man die wenigstens eine polyfunktionelle Verbindung V bei der überkritischen Trocknung als Lösung der Verbindung V in wenigstens einem organischen Lösungsmittel L', das 0 oder 1 reaktive Funktionalitäten F aufweist, einsetzt, wobei die in dem organischen Lösungsmittel L' gegebenenfalls vorhandene reaktive Funktionalität F ausgewählt ist unter Hydroxylgruppen, Carboxylgruppen, Carbonatgruppen und an P-Atome gebundenen Sauerstoffatomen.

Die erfindungsgemäß erhältlichen porösen, festen oxidischen Materialien weisen die Vorteile einer nur geringen Wasseraufnahme, einer hohen Wasserbeständigkeit und einer hohen Langzeitstabilität auf. Als polyfunktionelle Verbindung V im erfindungsgemäßen Verfahren können vor allem preisgünstige Verbindungen, beispielsweise mehrwertige Alkohole, Hydroxycarbonsäuren, Phosphate, Polyphosphate und/oder Polycarbonsäuren, eingesetzt werden.

Der Erfindung zugrunde liegt die Beobachtung, dass die polyfunktionellen Verbindungen V, welche wenigstens während der überkritischen Trocknung anwesend sind, durch Bindungsbildung mit der Oberfläche des erhaltenen porösen, festen oxidischen Materials dieses stabilisieren, d. h. die Wasseraufnahme in das poröse, feste oxidische Material verhindern.

Erfindungsgemäß bevorzugt verwendet man als Ausgangsmaterialien für die Herstellung der erfindungsgemäßen Materialien anorganische Hydrogele, d. h. Hydrogele auf Basis von Halbmetall- oder Metalloxiden, insbesondere Hydrogele auf Basis von Siliciumdioxid, Zinkoxid, Zinn(IV)-oxid, Titan(IV)-oxid, Cer(IV)-oxid und Aluminiumoxid, speziell auf Basis von Siliciumdioxid. Der Anteil an bevorzugt eingesetzten Hydrogelen auf Basis von Halbmetall- oder Metalloxiden beträgt im Allgemeinen wenigstens 90 Gew.-%, insbesondere wenigstens 95 Gew.-%, bezogen auf die Gesamtmenge der eingesetzten Hydrogele.

Verfahren zur Herstellung von Hydrogelen, welche den porösen, festen oxidischen Materialien zugrunde liegen, sind grundsätzlich bekannt, beispielsweise aus dem eingangs zitierten Stand der Technik. In der Regel erfolgt die Herstellung der Hydrogele durch Hydrolyse von geeigneten Metalloxid-Precursoren, beispielsweise Metallsalzen oder kovalenten Metallverbindungen oder Halbmetallverbindungen wie (Halb-)Metallhalogeniden oder (Halb-)Metallalkoxiden, gegebenenfalls gefolgt von einer partiellen Kondensation der bei der Hydrolyse gebildeten (Halb-)Metallhydroxide bzw. (Halb-)Metalloxidhydroxide.

Beispielsweise erfolgt die Herstellung von Hydrogelen auf Siliciumdioxidbasis im Allgemeinen unter Kondensation von Alkalimetall-Wasserglas, insbesondere Natronwasserglas. Dabei wird üblicherweise eine Wasserglas-Lösung, beispielsweise eine 10- bis 30-gewichtsprozentige, vorzugsweise 12- bis 20-gewichtsprozentige Wasserglaslösung, mit einer verdünnten wässrigen Säure, beispielsweise einer 1- bis 50-gewichtsprozentigen, insbesondere 5- bis 40-gewichtsprozentigen, insbesondere einer wässrigen Mineralsäure, vorzugsweise Schwefelsäure, vermischt. Vorzugsweise wird so viel Säure eingesetzt, dass sich im Mischprodukt ein pH-Wert von 7,5 bis 11, insbesondere 8 bis 11, besonders bevorzugt 8,5 bis 10, ganz besonders bevorzugt 8,5 bis 9,5, einstellt. Insbesondere geeignet für dieses Verfahren ist die Verwendung einer Mischdüse, aus der die Mischung aus Wasserglaslösung und verdünnter Mineralsäure versprüht wird und wobei das beim Vermischen gebildete Sol während der Flugphase in der Luft zu Hydrogeltröpfchen erstarrt. Selbstverständlich ist es z. B. auch möglich, Hydrogelformkörper herzustellen, indem man Wasserglas und verdünnte Säure in geeigneter Form zusammengibt und anschließend die Gelierung erfolgen lässt.

Bevorzugt befreit man vor Entfernen des Wassers das Hydrogel von ionischen Bestandteilen durch Waschen mit Wasser oder verdünnten wässrigen Lösungen anorganischer Basen, wobei man vorzugsweise so vorgeht, dass sich der pH-Wert des Hydrogels kaum, d. h. weniger als 2 pH-Einheiten, insbesondere weniger als 1 pH-Einheit, verändert und nahezu dem im Mischprodukt eingestellten Wert entspricht. Als anorganische Basen können beispielsweise wässrige Lösungen von Alkalimetallhydroxiden wie Natronlauge oder wässriger Ammoniak verwendet werden. Hierbei wird man vorzugsweise so vorgehen, dass das Hydrogel auch nach dem Waschvorgang einen pH-Wert in dem genannten Bereich von 7,5 bis 11, bevorzugt 8,5 bis 10, besonders bevorzugt 9 bis 10, aufweist. Vorzugsweise wird der Waschvorgang so lange durchgeführt, bis die Leitfähigkeit des abfließenden Waschwassers etwa 20 bis 300 µS/cm, vorzugsweise 50 bis 150 µS/cm beträgt. Das entspricht einem Alkalimetall-(Natrium-)Gehalt des Hydrogels von in der Regel 0,1 bis 1,7 Gew.-%, bevorzugt 0,4 bis 1,3 Gew.-%, ermittelt an einer bei 80 °C im Wasserstrahlvakuum getrockneten Probe.

Die erfindungsgemäß hergestellten Hydrogele können auch, wie in der DE 3914850 beschrieben, pigmenthaltig sein, wobei insbesondere solche Pigmente geeignet sind, die Infrarotstrahlung der Wellenlänge von 3 bis 10 µm streuen, absorbieren oder reflektieren. Derartige Pigmente werden dem Hydrogel in der Regel bereits bei seiner Herstellung zugesetzt.

Erfindungsgemäß entfernt man das Wasser aus dem Hydrogel durch Behandeln mit einer mit Wasser mischbaren organischen Flüssigkeit. Die zum Entfernen des Wassers eingesetzte, mit Wasser mischbare organische Flüssigkeit ist im Wesentlichen wasserfrei, d. h., sie weist im Allgemeinen einen Wassergehalt von maximal 5 Gew.-%, insbesondere 0 bis 2 Gew.-% und speziell 0 bis 1 Gew.-%, bezogen auf die gesamte mit Wasser mischbare Flüssigkeit, auf.

Durch das Behandeln des Hydrogels mit der mit Wasser mischbaren organischen Flüssigkeit wird die im Hydrogel enthaltene wässrige Phase durch die weitgehend oder im Wesentlichen wasserfreie mit Wasser mischbare organische Flüssigkeit weitgehend oder insbesondere nahezu vollständig ersetzt. Zum Behandeln des Hydrogels mit der mit Wasser mischbaren organischen Flüssigkeit wird das Hydrogel mit der Flüssigkeit in Kontakt gebracht, und anschließend wird das behandelte Produkt von der Flüssigkeit abgetrennt. Beispielsweise kann man das Hydrogel in der mit Wasser mischbaren organischen Flüssigkeit suspendieren und anschließend die festen oder gelförmigen Bestandteile von der flüssigen Phase trennen, z. B. durch Filtration oder Zentrifugation. Vorteilhafterweise wird die Behandlung unter Zuhilfenahme einer Durchflussapparatur vorgenommen. Hierzu wird das Hydrogel in ein geeignetes Gefäß eingebracht, das einen Zulauf für die mit Wasser mischbare organische Flüssigkeit und einen Ablauf aufweist, wobei Zulauf und Ablauf so angeordnet sind, dass das Hydrogel von der mit Wasser mischbaren organischen Flüssigkeit durchströmt wird. Über den Zulauf wird die mit Wasser mischbare organische Flüssigkeit eingespeist und über den Ablauf die Mischung aus der mit Wasser mischbaren organischen Flüssigkeit und Wasser abgezogen. Vorzugsweise wird die Behandlung so lange durchgeführt, bis der Wassergehalt der abfließenden organischen Phase weniger als 2 Vol.-%, vorzugsweise weniger als 1 Vol.-%, beträgt.

Die Temperatur, bei welcher die Behandlung vorgenommen wird, liegt üblicherweise im Bereich von 0 bis 60 °C, vorzugsweise im Bereich von 10 bis 50 °C, beispielsweise bei 20 bis 30 °C. Man kann die Behandlung des Hydrogels mit der wasserfreien, mit Wasser mischbaren organischen Flüssigkeit jedoch auch bei erhöhter Temperatur durchführen.

Das Entfernen des Wassers durch Behandeln mit der mit Wasser mischbaren, organischen Flüssigkeit erfolgt bevorzugt bei unterkritischen Bedingungen. Bevorzugt findet das Entfernen des Wasser bei Umgebungsdruck statt. Möglich ist auch der Austausch bei vermindertem Druck oder unter erhöhtem Druck. Üblicherweise erfolgt die Behandlung des Hydrogels mit der mit Wasser mischbaren Flüssigkeit bei Umgebungsdruck.

Als Resultat des Wasseraustausches im Hydrogel erhält man ein sogenanntes Organogel, in dem das physikalisch gebundene Wasser weitgehend durch die Bestandteile der mit Wasser mischbaren organischen Flüssigkeit ausgetauscht wurde.

Erfindungsgemäß ist die zum Behandeln des Hydrogels eingesetzte organische Flüssigkeit mit Wasser mischbar, d. h. die Flüssigkeit weist bei 20 °C mit Wasser keine Mischungslücke auf. Bevorzugt sind Flüssigkeiten, die bei Normaldruck einen Siedepunkt im Bereich von 10 bis 100 °C, insbesondere im Bereich von 10 bis 90 °C, aufweisen. Bevorzugt handelt es sich bei der mit Wasser mischbaren Flüssigkeit um ein organisches Lösungsmittel L oder ein Gemisch organischer Lösungsmittel L, das zu wenigstens 70 Gew.-%, bezogen auf die Gesamtmenge der mit Wasser mischbaren organischen Flüssigkeit, aus einem oder mehreren organischen Lösungsmitteln L besteht, die bei 20 °C mit Wasser keine Mischungslücke aufweisen. Neben dem organischen Lösungsmittel L kann die mit Wasser mischbare organische Flüssigkeit auch ein oder mehrere organische Lösungsmittel enthalten, die mit Wasser nicht oder nicht vollständig mischbar sind, beispielsweise C₂-C₈-Alkane wie Ethan, Propan, Butan, Isobutan, Pentan, Isopentan, n-Hexan und seine Isomere, n-Heptan und seine Isomere und n-Octan und seine Isomere. Neben dem organischen Lösungsmittel L kann die mit Wasser mischbare organische Flüssigkeit auch die Verbindung V enthalten.

Bevorzugt sind organische Lösungsmittel L, die bei Normaldruck einen Siedepunkt im Bereich von 30 bis 120 °C, insbesondere im Bereich von 30 bis 100 °C, aufweisen. Bevorzugt ist das organische Lösungsmittel L ausgewählt unter C₁-C₄-Alkanolen, wie beispielsweise Methanol, Ethanol, n-Propanol, Isopropanol, n-Butanol, Isobutanol, 2-Butanol und tert.-Butanol, C₁-C₄-Alkanalen wie Formaldehyd, Acetaldehyd, Propionaldehyd, Butyraldehyd und Isobutyraldehyd und C₃-C₄-Ketonen wie Aceton oder Methylethylketon sowie deren Mischungen. Besonders bevorzugt handelt es sich bei dem organischen Lösungsmittel L um ein C₁-C₄-Alkanol. Ganz besonders bevorzugt handelt es sich um Isopropanol.

Die mit Wasser mischbare organische Flüssigkeit, welche beim Entfernen des Wassers des Hydrogels eingesetzt wird, kann bereits die polyfunktionelle Verbindung V, wie unten definiert, umfassen. Bevorzugt wird beim Entfernen des Wassers des Hydrogels das organische Lösungsmittel L ohne Zusatz der polyfunktionellen Verbindung V eingesetzt.

Das Trocknen des Organogels erfolgt unter überkritischen Bedingungen in Gegenwart der polyfunktionellen Verbindung V. Die polyfunktionelle Verbindung V wird als Lösung in einem organischen Lösungsmittel L', das im Unterschied zu der Verbindung V höchstens eine oder keine Funktionalität F aufweist, eingesetzt. Die Konzentration der polyfunktionellen Verbindung V in dem organischen Lösungsmittel L' wird im Allgemeinen so gewählt, dass die erhaltene Mischung leicht in den überkritischen Zustand überführt werden kann.

Im Allgemeinen liegt die Konzentration der polyfunktionellen Verbindung V in der Lösung im Lösungsmittel L' daher im Bereich von 0,01 bis 50 Gew.-%, insbesondere im Bereich von 0,1 bis 20 Gew.-%, bezogen auf die gesamte Lösung. Entsprechend wird die polyfunktionelle Verbindung V im Allgemeinen in einer Menge im Bereich von 0,01 bis 50 Gew.-%, insbesondere im Bereich von 0,1 bis 20 Gew.-%, bezogen die Gesamtmenge an Lösungsmittel L' und polyfunktioneller Verbindung V, eingesetzt.

Die polyfunktionelle Verbindung V weist erfindungsgemäß wenigstens zwei, z. B. 2 bis 10 oder 2 bis 5, reaktive Funktionalitäten F auf, die ausgewählt sind unter C₂-C₆-Alkanpolyolen, C₂-C₄-Alkylencarbonaten und 2-Hydroxyphenol. Bevorzugt weist die Verbindung V zwei oder drei reaktive Funktionalitäten F auf. Als reaktive Funktionalitäten F werden im Sinne der Erfindung Atome und/oder Atomgruppen verstanden, die unter Ausbildung einer chemischen Bindung, vorzugsweise einer kovalenten chemischen Bindung, mit den Atomen des festen oxidischen Materials reagieren können.

Die in dem Lösungsmittel L' gegebenenfalls vorhandenen reaktiven Funktionalitäten F sind erfindungsgemäß ausgewählt unter Hydroxylgruppen, Carboxylgruppen, Carbonatgruppen und an P-Atome gebundenen Sauerstoffatomen. Insbesondere sind die reaktiven Funktionalitäten F ausgewählt unter kohlenstoffgebundenen Hydroxylgruppen, Carboxylgruppen und Carbonatgruppen. Besonders bevorzugt sind die reaktiven Funktionalitäten F ausgewählt unter kohlenstoffgebundenen Hydroxylgruppen und Carbonatgruppen.

Beispiele für geeignete Verbindungen V sind
- C₂-C₆-Alkanpolyole, z. B. zwei- oder dreiwertige, lineare oder verzweigte aliphatische Alkohole mit zwei bis sechs Kohlenstoffatomen. Beispiele sind Ethylenglykol, 1,2-Propandiol, 1,3-Propandiol, Neopentylglycol und Glycerin;
- 2-Hydroxyphenol (Brenzcatechin);
- C₂-C₄-Alkylencarbonate, d. h. cyclische Ester der Kohlensäure mit C₂-C₄-Alkandiolen, z. B. Ethylencarbonat (1,3-Dioxolan-2-on) und Propylencarbonat (4-Methyl-1,3-dioxolan-2-on).

Bevorzugte Verbindungen V sind Ethylenglykol, 1,2-Propandiol, 1,3-Propandiol, 2-Hydroxyphenol, Ethylencarbonat, Propylencarbonat und deren Mischungen.

Geeignete Lösungsmittel L' sind die vorgenannten, mit Wasser mischbaren Lösungsmittel L sowie C₂-C₈-Alkane und deren Gemische. Bevorzugte Lösungsmittel L' sind die zuvor genannten C₁-C₄-Alkanole, insbesondere Isopropanol. Bevorzugte Lösungsmittel L' sind außerdem Mischungen der zuvor genannten C₁-C₄-Alkanole, insbesondere Isopropanol, mit C₂-C₈-Alkanen.

Die überkritische Trocknung kann in üblicher Weise, beispielsweise in Analogie zu dem eingangs zitierten Stand der Technik, vorgenommen werden.

Im Allgemeinen wird das Organogel und die Lösung der Verbindung V in dem Lösungsmittel L' auf eine Temperatur oberhalb der kritischen Temperatur unter Druck erhitzt.

Das Trocknen des Organogels unter überkritischen Bedingungen erfolgt bevorzugt bei einer Temperatur von maximal 40 K insbesondere maximal 20 K oberhalb der kritischen Temperatur des Lösungsmittels L'. In der Regel liegt die Temperatur im Bereich von 100 bis 300 °C, bevorzugt 150 bis 280 °C. Der hierfür erforderliche Druck liegt typischerweise im Bereich von 30 bis 90 bar, bevorzugt 40 bis 70 bar.

Findet die überkritische Trocknung beispielsweise mit Isopropanol als Lösungsmittel L' statt, wird im Allgemeinen eine Temperatur von etwa 240 bis 270 °C und ein Druck von etwa 50 bis 70 bar eingestellt.

Erfindungsgemäß erfolgt die Trocknung unter überkritischen Bedingungen in Gegenwart wenigstens einer polyfunktionellen Verbindung V, die als Lösung in dem organischen Lösungsmittel L', wie zuvor definiert, vorliegt. Sofern die Verbindung V nicht bereits in ausreichender Menge in der beim Wasseraustausch eingesetzten im Wesentlichen wasserfreien, mit Wasser mischbaren organischen Flüssigkeit vorhanden ist, wird die Verbindung V, bevorzugt als Lösung im Lösungsmittel L', zum Organogel gegeben.

Zum Trocknen gibt man typischerweise die Mischung aus Organogel, der Verbindung V und dem Lösungsmittel L' in einen Druckbehälter und bringt die Mischung auf überkritische Bedingungen. Bevorzugt erhitzt man hierzu den verschlossenen Druckbehälter, z. B. einen Autoklaven, unter Begrenzung des Druckes auf eine überkritische Temperatur. Vorzugsweise hält man das Gemisch für einen Zeitraum von 1 min bis 8 h, insbesondere 1 min bis 4 h, unter überkritischen Bedingungen.

Das Lösungsmittel L' wird dann durch Entspannen, vorzugsweise isothermes Entspannen, bevorzugt allmählich durch schwaches Öffnen des Druckventils, aus dem Druckbehälter entfernt. Vorzugsweise führt man die Entspannung mit einer Entspannungsrate im Bereich von 0,1 bis 5 bar/min durch.

Während des überkritischen Trocknungsprozesses wird man vorzugsweise das Entstehen größerer Gasmengen durch unkontrollierte Verdampfung oder Ausgasung mittels Entspannen, d. h., besagtes Entfernen des Gasgemisches über das Druckventil, verhindern.

An den überkritischen Trocknungsschritt können sich weitere Reinigungs- und Aufarbeitungsschritte anschließen. Hierbei kann es sich beispielsweise um das Spülen des Druckbehälters mit Druckluft oder gasförmigem Stickstoff handeln, um insbesondere noch vorhandene Reste des Lösungsmittels L' zu entfernen. An den überkritischen Trocknungsschritt kann sich auch eine unterkritische, konventionelle Trocknung bei leicht erhöhter Temperatur, gegebenenfalls unter Spülen mit Druckluft oder gasförmigem Stickstoff, anschließen.

Als Verfahrensprodukt des erfindungsgemäßen Verfahrens erhält man ein poröses, festes oxidisches Material, das aufgrund der Behandlung mit der Verbindung V verbesserte Eigenschaften, insbesondere eine hydrophobierte Oberfläche und eine geringere Wasseraufnahme auch bei längerem Wasserkontakt, aufweist.

Aufgrund der hohen Porosität weist das Material nur geringe Schüttdichten von etwa 25 bis 300 g/L, insbesondere 50 bis 250 g/L auf. Der Anteil der Poren am Gesamtvolumen des Materials liegt bei etwa 50 bis 97 Volumen-%.

In bevorzugten Ausführungsformen der Erfindung umfasst das erfindungsgemäß erhältliche poröse, feste oxidische Material als Hauptkomponente, d. h. in einer Menge von 90 bis 100 Gew.-%, bezogen auf das Gesamtgewicht des oxidischen Materials, wenigstens eines Oxids aus der Gruppe Siliciumdioxid, Zinkoxid, Zinn(IV)-oxid, Titan(IV)-oxid, Cer(IV)-oxid und Aluminiumoxid. Insbesondere umfasst das erfindungsgemäß erhältliche poröse, feste oxidische Material als Hauptkomponente, d. h. in einer Menge von 90 bis 100 Gew.-%, bezogen auf das Gesamtgewicht des oxidischen Materials, wenigstens eines Oxids aus der Gruppe Siliciumdioxid, Titan(IV)-oxid und Aluminiumoxid oder eines Gemisches dieser Oxide mit wenigstens einem weiteren Oxid aus der Gruppe Zinkoxid, Zinn(IV)-oxid und Cer(IV)-oxid. Speziell umfasst das feste oxidische Material als Hauptkomponente, d. h. in einer Menge von 90 bis 100 Gew.-%, bezogen auf das Gesamtgewicht des oxidischen Materials, wenigstens eines Oxids aus der Gruppe Siliciumdioxid. Bei dem porösen, festen oxidischen Material handelt es sich um ein Aerogel. Bevorzugt handelt es sich bei dem porösen, festen oxidischen Material um ein Aerogel auf Basis von Siliciumdioxid.

Das erfindungsgemäß erhaltene poröse, feste oxidische Material kann sowohl als Granulat (übliche Teilchengrößen von 1 bis 8 mm), als auch nach vorheriger Mahlung oder dergleichen als Pulver (Teilchengrößen von weniger als 1 mm) für unterschiedliche Zwecke, z. B. wie in der Einführung beschrieben, eingesetzt werden.

Das durch das erfindungsgemäße Verfahren erhältliche poröse, feste oxidische Material weist im Allgemeinen eine Dichte im Bereich von 0,025 bis 0,25 g/cm³ auf.

Die erfindungsgemäßen Materialien sind für eine Vielzahl an Anwendungen geeignet.

Die folgenden Beispiele dienen zur Verdeutlichung der Erfindung.

### Beispiele:

Eingesetzte Chemikalien:
Isopropanol (99,9 %, Fa. BCD Chemie)
Ethylenglykol (99,8 %, Fa. Sigma-Aldrich)
1,2-Propandiol, (99 %, Fa. Sigma-Aldrich)
1,3-Propandiol (99 %, Fa. Sigma-Aldrich)
2-Hydroxyphenol (99 %, Fa. Sigma-Aldrich)
Ethylencarbonat (99 %, Fa. Sigma-Aldrich)
Propylencarbonat (99 %, Fa. Sigma-Aldrich)
1-Propanol (99 %, Fa. Sigma-Aldrich)
Ethanol (wasserfrei, 99 %, Fa. Sigma-Aldrich)

### Analytik:

Schüttdichte angelehnt an ISO 3944
Spezifische Oberfläche durch Adsorption von Stickstoff nach BET bei einer Temperatur von -196 °C nach DIN ISO 9277
Elementaranalyse (Bestimmung des Kohlenstoffgehaltes der Proben als Maß für den Erfolg der Oberflächenreaktion): vario MICRO cube (Fa. Elementar, Betriebsmodus CHN bei 1000 °C)
Kontaktwinkelmessungen nach DIN 55660
Wasseraufnahme: Messung der Gewichtszunahme der Proben nach Lagerung bei 23 °C und > 90 % relativer Feuchte für 24 h
Wasserbeständigkeit: Das zu untersuchende Material wurde im Mörser zu einem Pulver vermahlen. Man füllte etwa 5 mL Wasser in ein verschließbares 10-mL-Glasgefäß und gab so viel des Pulvers in das Glasgefäß, dass das Pulver die gesamte Oberfläche des Wassers bedeckte. Aufgrund seiner niedrigen Dichte schwamm das Pulver auf der Wasseroberfläche. Das für die vollständige Oberflächenbedeckung des Wassers im Glasgefäß erforderliche Pulvervolumen betrug etwa 1 mL. Das Glasgefäß wurde verschlossen, bei Zimmertemperatur gelagert und die Zeit gemessen, bis das aufschwimmende Pulver anfing auf den Boden des Glasgefäßes zu sinken. Je länger das Pulver vollständig an der Wasseroberfläche blieb, desto hydrolysebeständiger war die hydrophobe Oberflächenmodifikation des untersuchten Materials.

### Herstellungsbeispiele:

Herstellung eines Hydrogels auf Kieselsäurebasis:
Man stellte eine 13-Gew.-%ige Wasserglaslösung durch Verdünnen einer technischen Wasserglaslösung mit 27 Gew.-% Siliciumdioxid und 8 Gew.-% Natriumoxid mit Wasser her.

In einer Mischdüse führte man bei 20 °C und 2,5 bar 45,7 L/h der hergestellten 13-Gew.-%igen Wasserglaslösung mit 6 L/h einer 23-Gew.-%igen wässrigen Schwefelsäurelösung zusammen. Das durch fortschreitende Neutralisation der Wasserglaslösung in der Mischkammer gebildete unbeständige Hydrosol hatte einen pH-Wert von 8,1 ± 0,1 und wurde nach einer Verweilzeit von 0,1 s durch das Düsenmundstück (2 mm Durchmesser) versprüht. Der Flüssigkeitsstrahl zerfiel während des Flugs durch die Luft in einzelne Tropfen, die vor dem Auftreffen im Wasserbecken zu transparenten, mechanisch stabilen Hydrogelkugeln erstarrten.

Das auf diese Weise erhaltene Hydrogel wurde so lange mit entsalztem Wasser gewaschen, bis die abfließende Waschflüssigkeit eine elektrische Leitfähigkeit von weniger als 110 µS/cm und eine pH-Wert von 9,8 ± 0,1 aufwies. Der Natriumgehalt einer bei 80 °C im Wasserstrahlvakuum getrockneten Probe des Hydrogels betrug 1,1 Gew.-%.

### Herstellung des Alkogels (Isopropanol):

Man gab 2000 g des Hydrogels auf Kieselsäurebasis in einen 5-L-Behälter, den man vollständig mit Isopropanol füllte. Man pumpte bei 25 °C so lange wasserfreies Isopropanol durch den Behälter, bis der Wassergehalt des abfließenden Isopropanols weniger als 0,1 Vol.-% betrug. Hierzu wurden etwa 8 L Isopropanol benötigt.

### Überkritische Trocknung des Alkogels auf Isopropanolbasis (allgemeine Vorschrift):

Man gab 2 L des Alkogels zusammen mit 4 L Isopropanol und 40 mL der Verbindung V in einen beheizbaren Druckbehälter aus Edelstahl (RA4) mit einem Innenvolumen von 20 L und erhitzte die Mischung innerhalb von 5 h auf 270 °C, wobei der Druck in dem Druckbehälter auf 70 bar begrenzt wurde. Anschließend wurde innerhalb von 60 min isotherm entspannt. Das abgekühlte Reaktionsprodukt wurde entnommen und ca. 2 h bei 80 °C und 200 mbar nachgetrocknet.

### Beispiel 1 (Ethylenglykol):

Man ging von dem oben beschriebenen Alkogel auf Isopropanolbasis aus. Zur überkritischen Trocknung setzte man als Verbindung V Ethylenglykol ein.

Die Schüttdichte des erhaltenen Aerogels betrug 110 g/L. Die spezifische Oberfläche betrug 300 m²/g. Der Kohlenstoffgehalt betrug 5,8 Gew.-%. Die Oberfläche war hydrophob und wies einen Kontaktwinkel gegen Wasser von 155° auf. Die Wasseraufnahme betrug 1,1 Gew.-%. Die Wasserbeständigkeit betrug etwa 12 bis 14 Tage.

Die Oberfläche des Aerogels wurde mittels Festkörper-¹³C-NMR untersucht. Man erhielt zwei verschiedene Kohlenstoffsignale, die auf die beiden chemisch äquivalenten Kohlenstoffatome des Ethylenglykols einerseits sowie das sauerstoffgebundene Kohlenstoffatom des Isopropanols andererseits zurückzuführen sind. Das Intensitätsverhältnis der Signale zwischen zweifach gebundenen Ethylenglykolmolekülen und einfach gebundenen Isopropanolmolekülen betrug etwa 3 : 1.

### Beispiel 2 (1,2-Propandiol):

Man ging von dem oben beschriebenen Alkogel auf Isopropanolbasis aus. Zur überkritischen Trocknung setzte man als Verbindung V 1,2-Propandiol ein.

Die Schüttdichte des erhaltenen Aerogels betrug 112 g/L. Die spezifische Oberfläche betrug 310 m²/g. Der Kohlenstoffgehalt betrug 5,9 Gew.-%. Die Oberfläche war hydrophob und wies einen Kontaktwinkel gegen Wasser von ca. 140° auf. Die Wasseraufnahme betrug 1,8 Gew.-%. Die Wasserbeständigkeit betrug etwa 8 Tage.

### Beispiel 3 (1,3-Propandiol):

Man ging von dem oben beschriebenen Alkogel auf Isopropanolbasis aus. Zur überkritischen Trocknung setzte man als Verbindung V 1,3-Propandiol ein.

Die Schüttdichte des erhaltenen Aerogels betrug 120 g/L. Die spezifische Oberfläche betrug 310 m²/g. Der Kohlenstoffgehalt betrug 6,2 Gew.-%. Die Oberfläche war hydrophob und wies einen Kontaktwinkel gegen Wasser von ca. 145° auf. Die Wasseraufnahme betrug 1,9 Gew.-%. Die Wasserbeständigkeit betrug etwa 6 Tage.

### Beispiel 4 (2-Hydroxyphenol):

Man ging von dem oben beschriebenen Alkogel auf Isopropanolbasis aus. Zur überkritischen Trocknung setzte man als Verbindung V 2-Hydroxyphenol ein.

Die Schüttdichte des erhaltenen Aerogels betrug 110 g/L. Die spezifische Oberfläche betrug 340 m²/g. Der Kohlenstoffgehalt betrug 6,5 Gew.-%. Die Oberfläche war hydrophob und wies einen Kontaktwinkel gegen Wasser von ca. 155° auf. Die Wasseraufnahme betrug 1,0 Gew.-%. Die Wasserbeständigkeit betrug mehr als 14 Tage.

### Beispiel 5 (Ethylencarbonat):

Man ging von dem oben beschriebenen Alkogel auf Isopropanolbasis aus. Zur überkritischen Trocknung setzte man als Verbindung V Ethylencarbonat ein.

Die Schüttdichte des erhaltenen Aerogels betrug 120 g/L. Die spezifische Oberfläche betrug 320 m²/g. Der Kohlenstoffgehalt betrug 6 Gew.-%. Die Oberfläche war hydrophob und wies einen Kontaktwinkel gegen Wasser von ca. 150° auf. Die Wasseraufnahme betrug 1,2 Gew.-%. Die Wasserbeständigkeit betrug etwa 10 Tage.

### Vergleichsbeispiel 1 (Isopropanol):

Man ging von dem oben beschriebenen Alkogel auf Isopropanolbasis aus. Zur überkritischen Trocknung setzte man statt einer Mischung aus Isopropanol und Verbindung V ausschließlich Isopropanol ein.

Die Schüttdichte des erhaltenen Aerogels betrug 115 g/L. Die spezifische Oberfläche betrug 330 m²/g. Der Kohlenstoffgehalt betrug 6,0 Gew.-%. Die Oberfläche war hydrophob und wies einen Kontaktwinkel gegen Wasser zwischen 120 und 140° auf. Die Wasseraufnahme betrug 2,1 Gew.-%. Die Wasserbeständigkeit betrug etwa 12 bis 24 h.

### Vergleichsbeispiel 2 (1-Propanol):

Man ging von dem oben beschriebenen Alkogel auf Isopropanolbasis aus. Zur überkritischen Trocknung setzte man statt einer Mischung aus Isopropanol und Verbindung V ausschließlich 1-Propanol ein.

Die Schüttdichte des erhaltenen Aerogels betrug 125 g/L. Die spezifische Oberfläche betrug 320 m²/g. Der Kohlenstoffgehalt betrug 5,8 Gew.-%. Die Oberfläche war hydrophob und wies einen Kontaktwinkel gegen Wasser zwischen 120 und 140° auf. Die Wasseraufnahme betrug 2,0 Gew.-%. Die Wasserbeständigkeit betrug etwa 18 h.

### Vergleichsbeispiel 3 (Ethanol):

Man ging von dem oben beschriebenen Alkogel auf Isopropanolbasis aus. Zur überkritischen Trocknung setzte man statt einer Mischung aus Isopropanol und Verbindung V ausschließlich Ethanol ein.

Die Schüttdichte des erhaltenen Aerogels betrug 125 g/L. Die spezifische Oberfläche betrug 300 m²/g. Der Kohlenstoffgehalt betrug 5 Gew.-%. Die Oberfläche war hydrophob und wies einen Kontaktwinkel gegen Wasser zwischen 120 und 130° auf. Die Wasseraufnahme betrug 2,2 Gew.-%. Die Wasserbeständigkeit betrug etwa 8 bis 12 h.

## Patentansprüche

1. Verfahren zur Herstellung von porösen, festen oxidischen Materialien, bei denen es sich um Aerogele handelt, umfassend die Bereitstellung eines Hydrogels des oxidischen Materials, Entfernen des Wassers des Hydrogels durch Behandeln mit einer mit Wasser mischbaren organischen Flüssigkeit und Trocknen des erhaltenen Organogels unter überkritischen Bedingungen in Gegenwart wenigstens einer polyfunktionellen Verbindung V, die wenigstens zwei reaktive Funktionalitäten F aufweist, welche unter Bindungsbildung mit den Atomen des festen oxidischen Materials reagieren können, wobei die Verbindung V ausgewählt ist unter C₂-C₆-Alkanpolyolen, C₂-C₄-Alkylencarbonaten und 2-Hydroxyphenol, wodurch man das Aerogel erhält, wobei man die wenigstens eine polyfunktionelle Verbindung V bei der überkritischen Trocknung als Lösung der Verbindung V in wenigstens einem organischen Lösungsmittel L', das 0 oder 1 reaktive Funktionalität F aufweist, einsetzt, und wobei die in dem organischen Lösungsmittel L' gegebenenfalls vorhandene reaktive Funktionalität F ausgewählt ist unter Hydroxylgruppen, Carboxylgrupen, Carbonatgruppen und an P-Atome gebundenen Sauerstoffatomen.

2. Verfahren nach Anspruch 1, wobei das oxidische Material als Hauptkomponente wenigstens ein Oxid aus der Gruppe Siliciumdioxid, Zinkoxid, Zinn(IV)-oxid, Titan(IV)-oxid, Cer(IV)-oxid und Aluminiumoxid in einer Menge von 90 bis 100 Gew.-%, bezogen auf das Gesamtgewicht des oxidischen Materials, enthält.

3. Verfahren nach einem der vorhergehenden Ansprüche, wobei das Hydrogel ein anorganisches Hydrogel ist.

4. Verfahren nach einem der vorhergehenden Ansprüche, wobei das Hydrogel ein Hydrogel auf Basis von Siliciumdioxid ist.

5. Verfahren nach einem der vorhergehenden Ansprüche, wobei die Verbindung V zwei oder drei reaktive Funktionalitäten F aufweist.

6. Verfahren nach einem der vorhergehenden Ansprüche, wobei die Verbindung V ausgewählt ist unter Ethylenglykol, 1,2-Propandiol, 1,3-Propandiol, 2-Hydroxyphenol, Ethylencarbonat und Propylencarbonat.

7. Verfahren nach einem der vorhergehenden Ansprüche, wobei das organische Lösungsmittel L' bei Normaldruck einen Siedepunkt im Bereich von 10 bis 100 °C aufweist.

8. Verfahren nach einem der vorhergehenden Ansprüche, wobei das organische Lösungsmittel L' unter C₁-C₄-Alkanolen, C₂-C₈-Alkanen, C₁-C₄-Alkanalen, C₃-C₄-Ketonen und deren Mischungen ausgewählt ist.

9. Verfahren nach einem der vorhergehenden Ansprüche, wobei es sich bei dem organischen Lösungsmittel L' um Isopropanol handelt.

10. Verfahren nach einem der vorhergehenden Ansprüche, wobei die Menge an polyfunktioneller Verbindung V, bezogen auf die Gesamtmenge an Lösungsmittel L' und polyfunktioneller Verbindung V, im Bereich von 0,01 bis 50 Gew.-% liegt.

11. Verfahren nach einem der vorhergehenden Ansprüche, wobei man vor Entfernen des Wassers das Hydrogel von ionischen Bestandteilen durch Waschen mit Wasser oder verdünnten wässrigen Lösungen anorganischer Basen befreit.

12. Verfahren nach einem der vorhergehenden Ansprüche, wobei das Trocknen unter überkritischen Bedingungen bei einer Temperatur von maximal 20 °C oberhalb der kritischen Temperatur der mit Wasser mischbaren organischen Flüssigkeit erfolgt.

13. Poröses, festes oxidisches Material in Form eines Aerogels, erhalten durch ein Verfahren nach einem der vorhergehenden Ansprüche.

14. Material nach Anspruch 13 mit einer Dichte im Bereich von 0,025 bis 0,25 g/cm³.

15. Material nach einem der Ansprüche 13 oder 14, wobei das oxidische Material als Hauptkomponente wenigstens ein Oxid aus der Gruppe Siliciumdioxid, Zinkoxid, Zinn(IV)-oxid, Titan(IV)-oxid, Cer(IV)-oxid und Aluminiumoxid in einer Menge von 90 bis 100 Gew.-%, bezogen auf das Gesamtgewicht des oxidischen Materials, enthält.

## Claims

1. A process for producing porous solid oxidic materials which are aerogels, comprising
the provision of a hydrogel of the oxidic material, removal of the water from the hydrogel by treatment with a water-miscible organic liquid and drying of the organogel obtained under supercritical conditions in the presence of at least one polyfunctional compound C having at least two reactive functionalities F which can react to form a bond with the atoms of the solid oxidic material, wherein the compound C is selected from C₂-C₆-alkanepolyols, C₂-C₄-alkylene carbonates and 2-hydroxyphenol, which gives the aerogel, the at least one polyfunctional compound C being used in the supercritical drying operation as a solution of the compound C in at least one organic solvent S' having 0 or 1 reactive functionality F, and the reactive functionality F optionally present in the organic solvent S' being selected from hydroxyl groups, carboxyl groups, carbonate groups and oxygen atoms bonded to phosphorus atoms.

2. The process according to claim 1, wherein the oxidic material comprises, as the main component, at least one oxide from the group of silicon dioxide, zinc oxide, tin(IV) oxide, titanium(IV) oxide, cerium(IV) oxide and aluminum oxide in an amount of 90 to 100% by weight, based on the total weight of the oxidic material.

3. The process according to either of the preceding claims, wherein the hydrogel is an inorganic hydrogel.

4. The process according to any of the preceding claims, wherein the hydrogel is a hydrogel based on silicon dioxide.

5. The process according to any of the preceding claims, wherein the compound C has two or three reactive functionalities F.

6. The process according to any of the preceding claims, wherein the compound C is selected from ethylene glycol, 1,2-propanediol, 1,3-propanediol, 2-hydroxyphenol, ethylene carbonate and propylene carbonate.

7. The process according to any of the preceding claims, wherein the organic solvent S' at standard pressure has a boiling point in the range from 10 to 100°C.

8. The process according to any of the preceding claims, wherein the organic solvent S' is selected from C₁-C₄-alkanols, C₂-C₈-alkanes, C₁-C₄-alkanals, C₃-C₄ ketones and mixtures thereof.

9. The process according to any of the preceding claims, wherein the organic solvent S' is isopropanol.

10. The process according to any of the preceding claims, wherein the amount of polyfunctional compound C, based on the total amount of solvent S' and polyfunctional compound C, is in the range from 0.01 to 50% by weight.

11. The process according to any of the preceding claims, wherein removal of the water is preceded by freeing the hydrogel of ionic constituents by washing with water or dilute aqueous solutions of inorganic bases.

12. The process according to any of the preceding claims, wherein the drying under supercritical conditions is effected at a temperature of not more than 20°C above the critical temperature of the water-miscible organic liquid.

13. A porous solid oxidic material in the form of an aerogel obtained by a process according to any of the preceding claims.

14. The material according to claim 13 having a density in the range from 0.025 to 0.25 g/cm³.

15. The material according to either of claims 13 and 14, wherein the oxidic material comprises, as the main component, at least one oxide from the group of silicon dioxide, zinc oxide, tin(IV) oxide, titanium(IV) oxide, cerium(IV) oxide and aluminum oxide in an amount of 90 to 100% by weight, based on the total weight of the oxidic material.

## Revendications

1. Procédé de fabrication de matériaux oxydiques solides poreux, qui sont des aérogels, comprenant la préparation d'un hydrogel du matériau oxydique, l'élimination de l'eau de l'hydrogel par traitement avec un liquide organique miscible avec l'eau et séchage de l'organogel obtenu dans des conditions supercritiques en présence d'au moins un composé polyfonctionnel V, qui comprend au moins deux fonctionnalités réactives F, qui peuvent réagir avec formation de liaisons avec les atomes du matériau oxydique solide, le composé V étant choisi parmi les alcane-polyols en C₂-C₆, les carbonates d'alkylène en C₂-C₄ et le 2-hydroxyphénol, l'aérogel étant ainsi obtenu, ledit au moins un composé polyfonctionnel V étant utilisé lors du séchage supercritique sous la forme d'une solution du composé V dans au moins un solvant organique L' qui comprend 0 ou 1 fonctionnalité réactive F, et la fonctionnalité réactive F éventuellement présente dans le solvant organique L' étant choisie parmi les groupes hydroxyle, les groupes carboxyle, les groupes carbonate et les atomes d'oxygène reliés à des atomes P.

2. Procédé selon la revendication 1, dans lequel le matériau oxydique contient en tant que composant principal au moins un oxyde du groupe constitué par le dioxyde de silicium, l'oxyde de zinc, l'oxyde d'étain (IV), l'oxyde de titane (IV), l'oxyde de cérium (IV) et l'oxyde d'aluminium en une quantité de 90 à 100 % en poids, par rapport au poids total du matériau oxydique.

3. Procédé selon l'une quelconque des revendications précédentes, dans lequel l'hydrogel est un hydrogel inorganique.

4. Procédé selon l'une quelconque des revendications précédentes, dans lequel l'hydrogel est un hydrogel à base de dioxyde de silicium.

5. Procédé selon l'une quelconque des revendications précédentes, dans lequel le composé V comprend deux ou trois fonctionnalités réactives F.

6. Procédé selon l'une quelconque des revendications précédentes, dans lequel le composé V est choisi parmi l'éthylène glycol, le 1,2-propanediol, le 1,3-propanediol, le 2-hydroxyphénol, le carbonate d'éthylène et le carbonate de propylène.

7. Procédé selon l'une quelconque des revendications précédentes, dans lequel le solvant organique L' présente à pression normale un point d'ébullition dans la plage allant de 10 à 100 °C.

8. Procédé selon l'une quelconque des revendications précédentes, dans lequel le solvant organique L' est choisi parmi les alcanols en C₁-C₄, les alcanes en C₂-C₈, les alcanals en C₁-C₄, les cétones en C₃-C₄ et leurs mélanges.

9. Procédé selon l'une quelconque des revendications précédentes, dans lequel le solvant organique L' est l'isopropanol.

10. Procédé selon l'une quelconque des revendications précédentes, dans lequel la quantité de composé polyfonctionnel V, par rapport à la quantité totale de solvant L' et de composé polyfonctionnel V, se situe dans la plage allant de 0,01 à 50 % en poids.

11. Procédé selon l'une quelconque des revendications précédentes, dans lequel l'hydrogel est débarrassé des constituants ioniques par lavage avec de l'eau ou des solutions aqueuses diluées de bases inorganiques avant l'élimination de l'eau.

12. Procédé selon l'une quelconque des revendications précédentes, dans lequel le séchage a lieu dans des conditions supercritiques à une température d'au plus 20 °C au-dessus de la température critique du liquide organique miscible avec l'eau.

13. Matériau oxydique solide poreux sous la forme d'un aérogel, obtenu par un procédé selon l'une quelconque des revendications précédentes.

14. Matériau selon la revendication 13, ayant une densité dans la plage allant de 0,025 à 0,25 g/cm³.

15. Matériau selon l'une quelconque des revendications 13 ou 14, dans lequel le matériau oxydique contient en tant que composant principal au moins un oxyde du groupe constitué par le dioxyde de silicium, l'oxyde de zinc, l'oxyde d'étain (IV), l'oxyde de titane (IV), l'oxyde de cérium (IV) et l'oxyde d'aluminium en une quantité de 90 à 100 % en poids, par rapport au poids total du matériau oxydique.
